(19) Europäisches Patentamt / European Patent Office / Office européen des brevets

(11) **EP 1 279 430 B1**

(12) **FASCICULE DE BREVET EUROPEEN**

(45) Date de publication et mention
de la délivrance du brevet:
**29.09.2010  Bulletin 2010/39**

(51) Int Cl.:
**B01D 17/025** *(2006.01)*    **B01D 17/04** *(2006.01)*
**B01D 17/032** *(2006.01)*    **B01D 17/022** *(2006.01)*
**B01D 17/02** *(2006.01)*     **B01D 11/04** *(2006.01)*
**G01N 29/02** *(2006.01)*

(21) Numéro de dépôt: 02291856.9

(22) Date de dépôt: **23.07.2002**

(54) **Dispositif de séparation des phases d'un mélange diphasique et son application à la détermination des paramètres physiques et/ou chimiques de ce mélange**

Vorrichtung zur Trennung der Phasen eines zweiphasengemisches und deren Anwendung zur Bestimmung der physikalischen und/oder chemischen Parameter dieses Gemisches

Device to separate the phases of a two-phase mixture and its application to determine the physical and/or chemical parameters of this mixture

(84) Etats contractants désignés:
**AT BE BG CH CY CZ DE DK EE ES FI FR GB GR IE IT LI LU MC NL PT SE SK TR**

(30) Priorité:  **25.07.2001  FR 0109923**

(43) Date de publication de la demande:
**29.01.2003  Bulletin 2003/05**

(73) Titulaire: **Commissariat à l'Énergie Atomique et aux Énergies Alternatives**
**75015 Paris (FR)**

(72) Inventeurs:
• **Roudil, Danielle**
**30330 Tresques (FR)**
• **Malzieu, Francis**
**84420 Piolenc (FR)**

(74) Mandataire: **Simonnet, Christine et al**
**BREVALEX**
**3, rue du Docteur Lancereaux**
**75008 Paris (FR)**

(56) Documents cités:
**EP-A- 0 035 936    EP-A- 0 551 162**
**FR-A- 790 656    FR-A- 2 780 789**
**GB-A- 645 710    US-A- 4 647 371**
**US-A- 4 726 221    US-A- 6 015 494**

## Description

L'invention a trait à un dispositif de séparation des phases d'un mélange diphasique et l'application de ce dispositif à la détermination des paramètres physiques et/ou chimiques d'un mélange diphasique, en particulier d'un mélange diphasique liquide-liquide, de préférence d'une émulsion diphasique liquide-liquide.

Un tel dispositif est décrit dans GB-A-645710.

L'invention permet notamment d'établir les paramètres physiques d'un mélange diphasique, tel qu'une émulsion diphasique, par propagation d'ondes acoustiques planes.

On entend généralement par mélange diphasique, dans le cadre de la présente invention, toute émulsion ou dispersion, dans laquelle une première phase, par exemple une solution, se présente sous la forme d'une phase continue, une deuxième phase, par exemple une phase solide, liquide ou gazeuse, se présente, par exemple, sous forme de gouttes ou de particules dispersées dans la phase continue. La deuxième phase est communément appelée « phase dispersée ».

Un tel mélange diphasique est mis en oeuvre notamment pour séparer des éléments chimiques en solution. Le procédé de séparation consiste pour l'essentiel à mettre en contact une première solution, par exemple une solution aqueuse, contenant les éléments chimiques, avec une deuxième solution constituée par exemple d'un solvant organique, qui joue un rôle d'extractant. Cette mise en contact est destinée à permettre un transfert de matière entre les deux solutions.

Le transfert de matière est favorisé par la formation d'un mélange diphasique sous forme d'une émulsion ou d'une dispersion de fines gouttelettes, de façon à accroître l'aire interfaciale d'échanges entre les phases en présence. Une décantation permet de séparer enfin les liquides après le transfert de matière.

On connaît différents dispositifs de séparation fonctionnant selon le procédé mentionné ci-dessus. Parmi ceux-ci, on peut citer des dispositifs du type mélangeur-décanteur, du type extracteur centrifuge, ou des dispositifs à colonne pulsée.

Dans les colonnes d'extraction, on fait circuler à contre-courant les deux phases liquides, la phase lourde étant injectée en haut du fût et la phase légère en bas de ce fût. Par mise en contact de ces deux phases, l'élément à séparer se partage entre chacune des phases suivant les lois de la thermodynamique chimique et en jouant sur l'affinité d'un élément pour l'une des phases, on peut arriver à extraire cet élément presque complètement et à le séparer des autres éléments.

Ainsi, en particulier, les procédés d'extraction liquide-liquide, mis en oeuvre lors des opérations de retraitement des combustibles usés, sont réalisés dans des contacteurs qui, dans leur zone de mélange, produisent des émulsions diphasiques. L'efficacité du transfert d'éléments entre phases est liée notamment au pourcentage volumique local de phase dispersée et à l'aire interfaciale d'échange locale, mais on cherche aussi à déterminer d'autres paramètres physico-chimiques, des phases liquides en présence dans la zone d'émulsion, tels que les concentrations élémentaires des éléments (par exemple U,Pu), la conductivité, l'acidité, la densité, etc.

Ces divers paramètres peuvent être déterminés par plusieurs procédés. Un premier procédé consiste à prélever un échantillon, c'est-à-dire un petit volume d'émulsion, et à effectuer les mesures sur chaque phase après les avoir laisser décanter.

Cette manière de procéder présente cependant des inconvénients. En effet, le prélèvement d'émulsion perturbe le fonctionnement hydraulique du contacteur.

De plus, le prélèvement n'est possible que si le dispositif de séparation contient un volume suffisant de mélange. Par ailleurs, le volume prélevé doit être réinjecté dans le dispositif de séparation ou doit être stocké après chaque mesure. En outre, dans le cas ou le mélange diphasique contient des substances très radioactives, le prélèvement et le stockage d'échantillons de mesure peut s'avérer irréalisable ou très contraignant.

Un deuxième procédé, destiné en particulier à établir la densité de la phase continue et les vitesses ou temps de propagation des ondes séparément dans chacune des phases lors du traitement, consiste à aménager dans le dispositif de séparation des chambres de décantation, au voisinage d'une zone de mélange. Ces chambres de décantation « in situ » sont cependant susceptibles de modifier le comportement hydraulique du dispositif et de modifier localement les caractéristiques du mélange diphasique.

De manière plus précise, en ce qui concerne plus spécifiquement le taux de rétention local, une méthode de mesure de taux de rétention local par propagation d'onde ultrasonore a déjà été décrite dans les documents [1] et [2] et [3].

Elle montre que ce paramètre $\beta$ peut être répresenté par :

$$\beta = \frac{t - t_c}{g_d t_d - g_c t_c} \qquad (1)$$

avec :

> t, $t_c$ et $t_d$ = temps de vol de l'onde ultrasonore dans l'émulsion, la phase continue et la phase dispersée seules ; et
> $g_c$ et $g_d$ = facteur de correction du parcours acoustique en phase aqueuse et organique.

En présence de transfert de matière entre les phases, une calibration en ligne des vitesses de propagation dans chacune des phases doit être réalisée dans les mêmes conditions physico-chimiques que celle de la mesure dans l'émulsion.

Une méthode destructive a été proposée dans le document [4] par prélèvement et décantation d'un volume d'émulsion avant mesure.

Une méthode par microscopie acoustique a également été décrite dans le document [5] et présente l'avantage d'être non destructive ni intrusive, mais elle ne permet d'accéder qu'au paramètre de calibration dans la phase continue.

De même, pour ce qui concerne l'aire interfaciale d'échange, il existe des méthodes optiques pour analyser la taille moyenne et le nombre moyen de gouttes permettant d'accéder à l'aire interfaciale d'échange locale. Mais ces techniques, par diffusion et diffraction de la lumière, supposent la connaissance en ligne du taux de rétention local ; c'est par exemple le principe sur lequel sont basés les appareils de la société FORULACTION®, commercialisés sous le nom de TURBISCAN®.

La quantité élevée de gouttes ne permet pas d'envisager une détermination simple, par analyse et traitement d'images.

Les déterminations en ligne des autres paramètres se font par analyses sur prise d'échantillons.

La mesure de la densité de la phase continue est réalisée dans le document [5] par microscopie acoustique, mais la méthode seule ne permet pas d'atteindre la valeur dans la phase dispersée.

Le problème de détermination des paramètres physico-chimiques se pose avec une acuité particulière dans les appareils actuellement mis en oeuvre dans des nouvelles installations d'extraction liquide-liquide pour le retraitement des combustibles nucléaires usés. En effet, afin de limiter les volumes de matière nucléaire, les colonnes sont de dimensions très réduites.

Dans de tels appareils, peu de prises d'échantillons peuvent être effectuées en ligne et la géométrie des appareils d'extraction implique de limiter au maximum les perturbations hydrauliques par intrusion ou modification locale des dimensions.

Il existe donc un besoin pour un dispositif de séparation et de renouvellement des phases d'un mélange diphasique, en particulier d'un mélange diphasique liquide-liquide, par exemple d'une émulsion diphasique liquide-liquide, qui ne modifie pas le comportement hydraulique du dispositif dans lequel il se trouve placé et qui ne modifie pas les caractéristiques du mélange diphasique.

Il existe encore un besoin pour un dispositif de séparation et de renouvellement des phases d'un mélange diphasique, notamment d'une émulsion diphasique liquide-liquide qui permette une séparation et un renouvellement parfaits, complets, des phases.

Il existe également un besoin pour un dispositif de mesure des paramètres physiques et chimiques d'une émulsion diphasique liquide-liquide qui permette de réaliser ces mesures sans prise d'échantillon, sans intrusion, sans induire de perturbation hydraulique et sans modifier les caractéristiques du mélange diphasique.

Il existe enfin un besoin pour un dispositif de mesure permettant de réaliser de telles mesures avec une grande fiabilité et une grande précision, quels que soient la nature et le volume de l'émulsion.

Le but de la présente invention est de fournir un dispositif de séparation et de renouvellement des phases d'un mélange diphasique, par exemple d'une émulsion diphasique liquide-liquide qui réponde, entre autres, aux besoins indiqués ci-dessus.

Le but de la présente invention est encore de fournir un dispositif de séparation et de renouvellement des phases d'un mélange diphasique, par exemple d'une émulsion diphasique liquide-liquide qui ne présente pas les inconvénients, limitations, défauts et désavantages des dispositifs de l'art antérieur et qui résolve les problèmes de l'art antérieur.

Ce but et d'autres encore sont atteints, conformément à l'invention, par un dispositif de séparation et de renouvellement des phases d'un mélange diphasique liquide-liquide constituée par une première phase liquide et par une seconde phase liquide circulant à contre-courant dans un appareil d'extraction liquide-liquide, ledit dispositif de séparation se présentant sous la forme d'un cylindre droit creux dont la génératrice principale est sensiblement perpendiculaire au sens de déplacement des phases liquides, et dont une des bases est constituée par la paroi de l'appareil d'extraction ou est positionnée au contact de cette paroi, ledit cylindre comprenant :

- un orifice d'entrée pour la phase que l'on souhaite piéger, placé sur la paroi latérale du cylindre sensiblement dans l'axe de déplacement de ladite phase que l'on souhaite piéger ;
- un orifice de sortie pour ladite phase que l'on souhaite piéger, séparée, de taille relativement plus petite que ledit orifice d'entrée et situé sur l'autre des bases du cylindre ;

- un troisième orifice, pour l'autre phase, de taille intermédiaire à la taille de l'orifice d'entrée et à la taille de l'orifice de sortie, placé au voisinage de l'orifice d'entrée.

Le dispositif de séparation et de renouvellement des phases selon l'invention, du fait de sa géométrie particulière, de la disposition spécifique des orifices d'entrée et de sortie des phases, et des dimensions relatives spécifiques de ces orifices, a pour effet, entre autres, de limiter les perturbations hydrauliques, de ne pas affecter les caractéristiques du mélange diphasique, et de permettre une séparation complète, totale des phases. De ce fait, le dispositif de l'invention apporte une solution aux problèmes posés par les dispositifs de l'art antérieur et répond, de manière satisfaisante, à tous les besoins indiqués plus haut.

De préférence, le mélange diphasique est une émulsion (ou dispersion) diphasique liquide-liquide.

Avantageusement, le matériau constituant le dispositif de l'invention a une mouillabilité qui est adaptée à la phase que l'on souhaite piéger.

La phase que l'on souhaite piéger est généralement soit une phase organique, soit une phase aqueuse.

Ainsi, si la phase que l'on souhaite piéger est une phase organique, on choisira de préférence un matériau à la fois organophile et hydrophobe, tel que le TEFLON® (polytétrafluoroéthylène PTFE), le PVDF (poly(fluorure de vinylidène)) qui résiste mieux aux irradiations), ou le polychlorotrifluoroéthylène (KEL-F®).

Si la phase que l'on souhaite piéger est une phase aqueuse, alors on choisira de préférence un matériau hydrophile, tel que l'acier inoxydable ou le polyéthylène.

Avantageusement, le dispositif selon l'invention est de taille réduite, il est ainsi parfaitement adapté aux appareils d'extraction liquide-liquide des installations de retraitement des combustibles nucléaires usés.

Malgré sa taille réduite, il remplit parfaitement son rôle de séparateur, tout en conservant cependant un volume suffisant de phase séparée pour permettre la réalisation des mesures et analyses physico-chimiques, par exemple, en ligne.

La taille, les dimensions, du dispositif de l'invention sont bien entendu fonction de la taille des dimensions du dispositif d'extraction liquide-liquide, dans lequel il se trouve placé.

La longueur et le diamètre des dispositifs sont ajustés de façon à :

- maintenir le volume local ;
- assurer une transparence de 20 à 30 % (les séparateurs remplaçant alors les plateaux du garnissage).

La longueur du dispositif reste ainsi généralement inférieure ou égale à 85 % du diamètre du fût ou de la bride. Le diamètre maximum du dispositif est généralement également inférieur ou égal à 90 % du diamètre du fût ou de la bride de l'appareil d'extraction.

Il est également à noter que la bride intermédiaire n'a pas obligatoirement la même géométrie que le fût.

Les valeurs minimales sont les valeurs de diamètre et longueur (volume de séparation) minimales pour assurer la séparation et le renouvellement.

Selon notre expérience, la longueur minimale et voisine de 6 mm, par exemple ($l_{min} \sim 6$ mm) et le diamètre minimal est voisin de 10 mm, par exemple ($\varnothing_{min} \sim 10$ mm).

Mais cela dépend aussi du matériau utilisé et de la nature de la phase. En effet, l' « accrochage » est plus ou moins important sur les parois internes selon l'affinité, la viscosité, etc.

Ainsi, à titre d'exemple, si le dispositif d'extraction a un diamètre (diamètre de fût) de 50 mm, le ou les dispositifs selon l'invention seront des cylindres de diamètre de 25 mm et de longueur 20 mm.

Si le dispositif d'extraction a un diamètre de 27 mm, le ou les dispositifs selon l'invention seront des cylindres de diamètre 15 mm et de longueur 12 mm.

Enfin, si le dispositif d'extraction a un diamètre de 15 mm, le ou les dispositifs selon l'invention seront des cylindres de diamètre 12 mm et de longeur intérieure 10 mm (12 à 13 mm extérieur).

Le dispositif de séparation selon l'invention peut être muni d'un ou plusieurs capteurs différents, pour réaliser des mesures dans la phase séparée.

Ces mesures sont notamment des mesures physiques et/ou chimiques, telles que des mesures de la concentration, de la conductivité, de la température, du pH, etc.

L'invention concerne, en outre, une bride intermédiaire d'instrumentation pour un appareil d'extraction liquide-liquide comprenant un ou plusieurs dispositifs de séparation et de renouvellement des phases, tels qu'ils ont été décrits ci-dessus.

Avantageusement, ladite bride est équipée de un ou plusieurs capteur(s), par exemple de un à dix capteurs qui sont des capteurs, réalisant des mesures physico-chimiques, en ligne dans la phase séparée de chacun des dispositifs de séparation et de renouvellement des phases.

Avantageusement, la bride est munie, en outre, de un ou plusieurs capteurs, par exemple de un à dix capteurs qui sont, par exemple, des capteurs ultrasons, pour réaliser des mesures au sein même du mélange diphasique, par exemple de l'émulsion.

Le ou les capteur(s) (que ce soit dans les séparateurs ou indépendamment de ceux-ci dans les brides ou indépendamment de celles-ci) réalise(nt) des mesures physiques, chimiques, optiques, acoustiques choisies notamment parmi, par exemple les mesures de densité, de concentration, d'acidité, de température, de pH, de conductivité, de diffusion, diffraction, absorption de la lumière, et de propagation, atténuation des ondes acoustiques.

La bride peut ainsi comprendre un ou plusieurs capteur(s) pour réaliser des mesures de référence relatives à un ou plusieurs paramètre(s) ou grandeur(s) dans la phase séparée du ou des dispositif(s) de séparation de phase et un ou plusieurs capteurs pour réaliser des mesures relatives au(x) même(s) paramètre(s) ou grandeur(s) au sein de l'émulsion.

Le ou les capteurs peuvent être notamment des capteurs ultrasons.

La bride peut avantageusement comprendre trois ou quatre capteurs ultrasons et deux dispositifs de séparation de phase.

L'invention concerne enfin un dispositif de mesure, d'instrumentation, en ligne pour appareil d'extraction liquide-liquide comprenant une ou plusieurs bride(s), telle(s) que définie(s) ci-dessus.

Avantageusement, lesdites brides sont disposées tout au long du dispositif d'extraction, afin d'établir un profil de mesures concernant un ou plusieurs paramètre(s) du mélange.

L'invention va maintenant être décrite plus en détails dans la description qui va suivre, faite à titre illustratif et non limitatif, en référence aux dessins joints, dans lesquels :

- la figure 1 est une vue latérale en coupe schématique d'un dispositif de séparation et de renouvellement de phases selon l'invention ;
- la figure 2 est une vue latérale en coupe schématique montrant la séparation et le renouvellement d'un phase aqueuse dans un dispositif de séparation selon l'invention, le séparateur étant en inox, ou en polyéthylène ;
- la figure 3 est une vue latérale en coupe schématique montrant la séparation et le renouvellement d'une phase organique dans un dispositif de séparation selon l'invention, le séparateur étant en TEFLON® ;
- la figure 4 est une vue latérale en coupe schématique montrant une bride intermédiaire instrumentée et équipée de deux séparateurs de phases selon l'invention, l'un pour la phase aqueuse et l'autre pour la phase organique, ladite bride étant placée dans une colonne d'extraction liquide-liquide à plateaux et étant munie de capteurs pour réaliser des mesures dans chacune des phases séparées et dans le mélange diphasique ;
- les figures 5A et 5B sont des vues schématiques montrant des exemples de mise en oeuvre des mesures sur plusieurs brides équipées de séparateurs de phase, en multiplexant les signaux (1 et 2) ;
- la figure 6 est une vue schématique d'un appareil contenant un mélange diphasique, tel qu'une émulsion, le long duquel sont positionnées des brides intermédiaires instrumentées selon l'invention, permettant d'établir des profils de mesure le long de la zone de mélange.

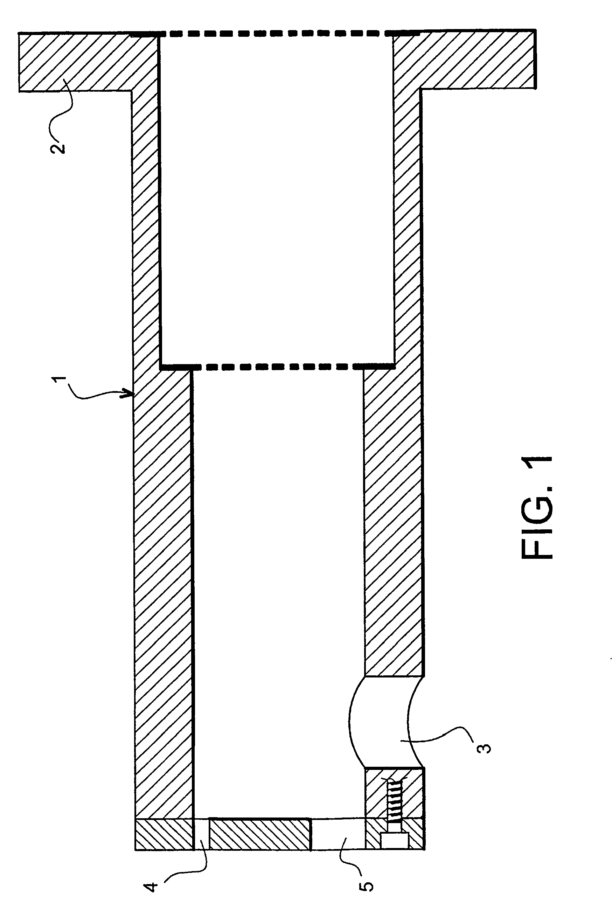

Sur la figure 1, on a représenté un dispositif de séparation et de renouvellement des phases d'un mélange diphasique, en particulier d'une émulsion liquide-liquide selon l'invention, qui permet la séparation et le renouvellement automatique desdites phases.

Ce dispositif se présente sous la forme d'un cylindre droit, creux, une des bases dudit cylindre, droit, étant constituée par la paroi (2) de l'appareil d'extraction ou étant positionnée au contact de ladite paroi.

Le cylindre est doté d'orifices d'introduction et de renouvellement des phases.

Conformément à l'invention, le cylindre (1) est placé dans le dispositif d'extraction, de façon à ce que sa génératrice principale soit perpendiculaire au sens de déplacement des phases liquides.

L'orifice d'entrée (3) de la phase à piéger est plus large et se présente généralement sous la forme d'un perçage ou piquage circulaire d'un diamètre, par exemple, de 2 à 5 mm, pour une colonne de diamètre inférieur à 30 mm, le diamètre du perçage est bien sûr également lié au volume du séparateur.

Le cylindre comprend également un orifice de sortie de la phase à piéger (4) qui est généralement situé sur le côté par rapport à l'orifice d'entrée, c'est-à-dire sur l'autre des bases du cylindre, qui n'est pas la base constituée par la paroi de l'appareil du dispositif d'extraction ou positionnée au contact de cette paroi. Cet orifice de sortie se présente généralement sous la forme d'un perçage ou piquage circulaire et il est de plus petite taille que l'orifice d'entrée. Ainsi, cet orifice de sortie aura généralement un diamètre, par exemple de à 0,8 à 1,2 mm, pour une colonne de diamètre inférieur à 30 mm.

Le dispositif de séparation selon l'invention comprend enfin un troisième orifice (5), situé à proximité de l'orifice d'entrée, généralement sur la même base du cylindre que l'orifice (4) et qui sert à l'évacuation éventuelle de la phase non souhaitée, si elle pénètre dans l'appareil.

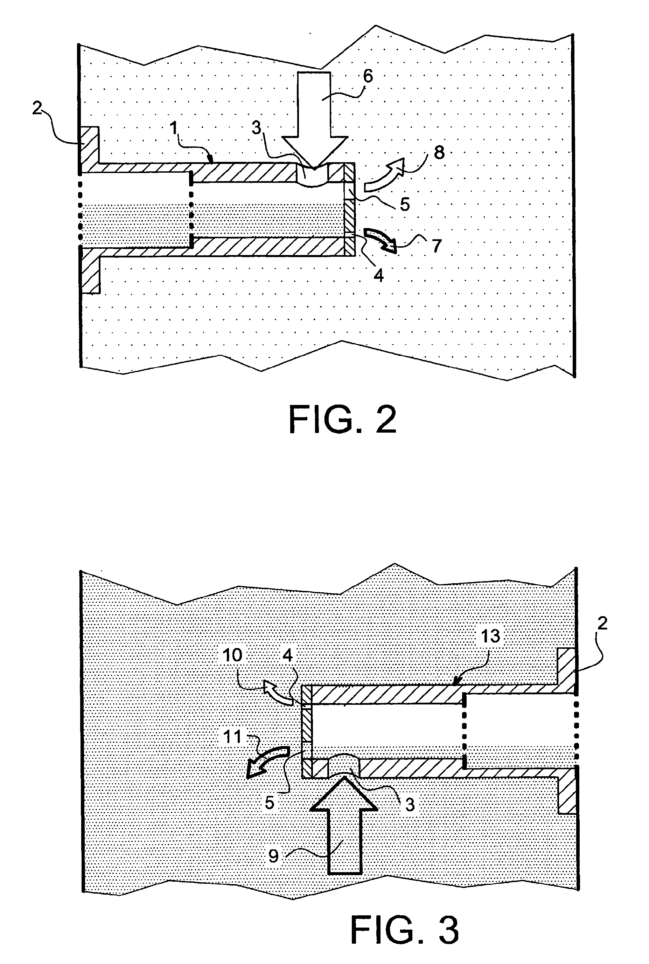

Sur les figures 2 et 3, sont montrés les mécanismes de séparation et de renouvellement respectivement d'une phase aqueuse lourde (disposée dans la phase organique) et d'une phase organique légère (disposée dans la phase aqueuse).

Par exemple, sur la figure 2, le mélange diphasique (phase aqueuse dans la phase organique) pénètre (flèche 6) par l'orifice (3) dans le dispositif de séparation (1). La phase aqueuse séparée est évacuée (flèche 7) par l'orifice (4), la phase organique ayant pénétré dans le dispositif est évacuée (flèche 8) par l'orifice (5).

Sur la figure 3, le mélange diphasique (phase organique dans la phase aqueuse) pénètre de même (flèche 9) par l'orifice (3) dans le dispositif de séparation (1). La phase organique séparée est évacuée (flèche 10) par l'orifice (4), la phase aqueuse ayant pénétré dans le dispositif est évacuée (flèche 11) par l'orifice (5).

La séparation et le renouvellement sont effectués de manière efficace grâce aux propriétés de mouillabilité adaptées des matériaux utilisés pour réaliser les séparateurs selon l'invention, de ce fait peu d'émulsion est introduite, et généralement seule la phase à séparer se présente.

C'est-à-dire que les matériaux permettant d'obtenir les capacités de séparation des dispositifs selon l'invention sont choisis en fonction de leurs propriétés de mouillabilité par rapport à la nature des phases de l'émulsion. Ainsi, par exemple, dans les procédés de retraitement, on choisira de préférence un matériau hydrophile, tel que l'acier inoxydable ou le polyéthylène, pour séparer la phase aqueuse constituée, par exemple d'acide nitrique ; tandis que l'on réalisera un matériau plutôt hydrophobe et organophile, tel que le TEFLON®, et certains autres polymères résistant à l'irradiation, pour séparer la phase organique constituée, par exemple, de TBP à 30 % dans le TPH.

La géométrie cylindrique des séparateurs s'est avérée être optimale pour limiter au maximum les perturbations hydrauliques liées à l'intrusion ou à la modification locale des dimensions, en outre, les dispositifs selon l'invention s'adaptent parfaitement et ceci est surprenant aux appareils de petit volume, par exemple aux colonnes de faible diamètre qui sont désormais mis en oeuvre dans les installations d'extraction pour le retraitement des combustibles usés.

La géométrie des dispositifs selon l'invention est fonction des dimensions de l'appareil contenant l'émulsion et du volume minimum nécessaire de phase séparée pour réaliser les mesures et les analyses physico-chimiques en ligne.

A titre d'exemple dans une colonne d'extraction comportant un fût de diamètre 50 mm, les dispositifs selon l'invention auront un diamètre de 25 mm et une longueur de 20 mm.

Dans une colonne comportant un fût d'un diamètre de 27 mm, les dispositifs selon l'invention auront un diamètre de 15 mm et une longueur de 12 mm.

Dans une colonne comportant un fût d'un diamètre de 15 mm, les dispositifs selon l'invention auront un diamètre de 12 mm et une longueur de 10 mm.

Quel que soit le volume, même très réduit, de l'appareil sur lequel ils sont adaptés, les dispositifs selon l'invention, ces derniers n'apportent que très peu de perturbations hydrauliques et assurent d'excellentes séparations et renouvellements des phases.

Ainsi, les essais sur colonnes pulsées pilotes de diamètres 50 et 27 mm ont montré que le pouvoir de séparation des dispositifs de l'invention est uniquement fonction de l'énergie de l'agitation, représentée traditionnellement par le produit amplitude fréquence de la pulsation de la colonne.

Des courbes donnant la vitesse de propagation acoustique à 20°C en fonction de la pression de pulsation en mbar et de l'a. f., c'est-à-dire du produit amplitude fréquence représentant l'énergie de pulsation apportée au système diphasique pour chaque colonne pulsée de diamètre différent (50 mm et 27 mm) et pour chaque matériau testé (inox, TEFLON® et polyéthylène) ont été réalisées. La séparation est prouvée par la stabilité de la valeur de la vitesse acoustique, quelle que soit la quantité d'émulsion présente localement dans le fût de colonne pulsée.

L'efficacité du renouvellement a quant à elle été validé par la modification de l'acidité des phases introduites. Les résultats montrent par comparaison aux analyses sur prises d'échantillons, qu'il est toujours obtenu complètement.

La vitesse de propagation acoustique à température constante est mesurée et comparée aux valeurs d'étalonnage réalisées en laboratoire. Les évolutions en fonction de l'acidité sont totalement comparables.

En outre, on a pu montrer, sur un système biphasique à l'équilibre, la plage de fonctionnement d'un séparateur inox en terme de pression de pulsation et de produit amplitude fréquence. Pour la phase aqueuse, dans le séparateur inox, aucune émulsion n'est introduite entre 0 et 130 mbars, soit un produit amplitude fréquence $a.f \leq 2,6$ cm.s$^{-1}$.

De manière analogue, pour un séparateur Téflon®, la plage de fonctionnement pour la séparation de la phase organique est $0 \leq a.f \leq 3,5$ cm.s$^{-1}$.

Encore de manière analogue, pour le séparateur polyéthylène de phase aqueuse, la plage de fonctionnement en a.f est identique.

En outre, l'efficacité de renouvellement de séparateurs en inox, téflon et polyéthylène a été prouvée en montrant la variation de vitesse de propagation dans le milieu séparé lors de transfert de matière (simulé par variation d'acidité).

La loi de variation de vitesse, en fonction de l'acidité, est comparable à celle obtenue en laboratoire.

L'invention concerne, en outre, un dispositif, dit de « bride intermédiaire » instrumentée, pour un appareil d'extraction liquide-liquide, tel qu'une colonne pulsée. Ladite bride peut comprendre un ou plusieurs dispositifs, par exemple jusqu'à dix dispositifs de séparation et de renouvellement des phases, tels qu'ils ont été décrits ci-dessus.

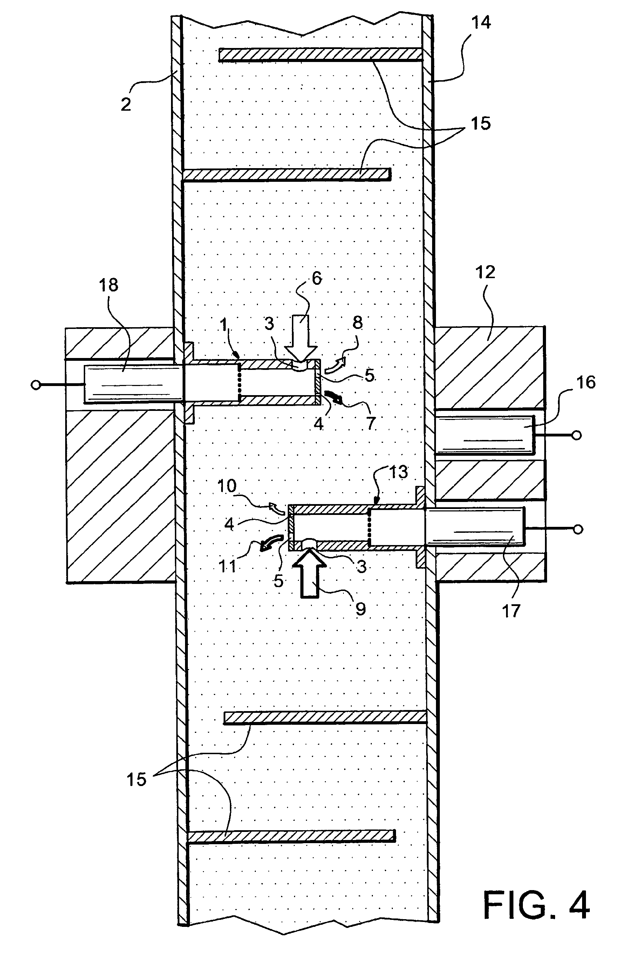

Sur la figure 4, on a illustré une telle bride intermédiaire (12) équipée de deux séparateurs de phases (1, 13), l'un pour une des phases, par exemple la phase aqueuse (1), et l'autre, pour l'autre phase, par exemple la phase organique (13). Ladite bride est placée dans un appareil d'extraction liquide-liquide, tel qu'une colonne pulsée (14) munie de plateaux (15).

Les capteurs (16, 17, 18) sont regroupés au niveau de la bride, au contact direct, ou par transmission par l'intermédiaire de guides d'ondes. Toute mesure physique, chimique, optique, acoustique, etc., telle que mesure de la densité, de la concentration de l'acidité, de la conductivité, dans l'émulsion et/ou les phases séparées dans chacun des séparateurs est envisageable et ne conduit qu'à une modification éventuelle de la géométrie des séparateurs, afin de réaliser le positionnement du capteur. Des capteurs particuliers et intéressants sont des capteurs à ultrasons.

La géométrie interne de la bride est calculée en fonction des dimensions de l'appareil d'extraction liquide-liquide, par exemple de la colonne pulsée, et ne crée pas de perturbations hydrauliques.

Aussi, le volume est conservé, c'est-à-dire que le volume de la bride est égal au volume d'une même hauteur de fût de colonne, en tenant compte des dispositifs de séparation. Pour éviter des pertes de charge trop importantes et des risques d'engorgement rapide, la transparence est maintenue supérieure à 20 % ou 25 % en tout point.

Rappelons que la transparence est définie comme le rapport du diamètre de plateau sur le diamètre de la colonne.

La bride peut être réalisée dans tout matériau, par exemple en acier inoxydable, ou en un polymère compatible avec les phases de l'émulsion pouvant être usiné et résistant aux agressions chimiques des solutions utilisées et compatibles, si besoin est, avec une implantation en environnement irradiant.

La bride de la figure 4 est équipée, par exemple, de trois capteurs (16, 17, 18), de préférence ces capteurs sont des capteurs à ultrasons, dont les mesures permettent de déterminer de nombreux paramètres de l'émulsion, tels que la masse volumique, le taux de rétention local, l'impédance acoustique, la taille et le nombre de gouttes, etc.

Sur la figure 4, deux capteurs (17, 18) réalisent des mesures dans les phases séparées de chacun des séparateurs, et un troisième capteur (16) réalise des mesures dans l'émulsion.

Les trois capteurs à ultrasons sont reliés à un étage multiplexeur - émetteur - amplificateur pour signaux ultrasons, puis à un étage de numérisation et de traitement des signaux ultrasons.

Ainsi, cette bride permet en particulier de créer une mesure de taux de rétention local (ou pourcentage volumique de phase dispersée) avec autocalibration par séparation de phase in situ, prenant en compte les modifications physico-chimiques subies par les phases de l'émulsion. Selon la formule (1) ci-dessus, trois capteurs ultrasons sont nécessaires. Les paramètres $t_c$ et $t_d$ sont mesurables dans les séparateurs de phase par localisation temporelle du premier écho, connaissant la longueur du parcours acoustique 2 x 1 (1 étant la longueur du séparateur). Le temps de traversée t dans l'émulsion peut être mesuré par transparence ou par écho, selon la valeur du diamètre de la bride et la nature des phases de l'émulsion (absorption du son liée à la viscosité) et de la fréquence ultrasons choisie.

Par exemple, en système de phase acide nitrique - TBP 30 % dans TPH, la mesure par écho peut être réalisée sans problème à 2 MHz, jusqu'à un diamètre de 20 mm (parcours acoustique de 40 mm).

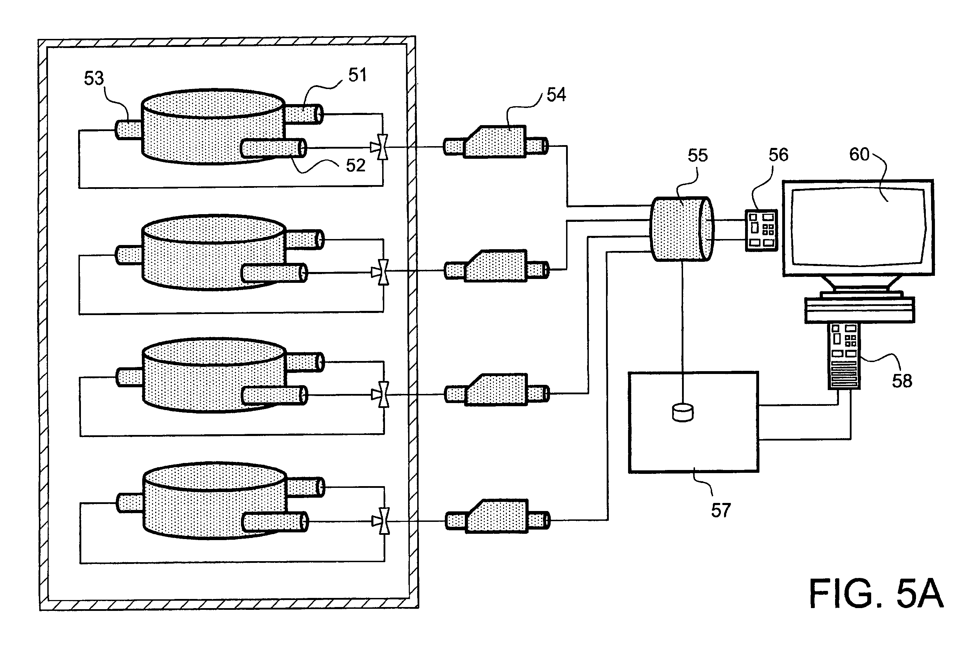

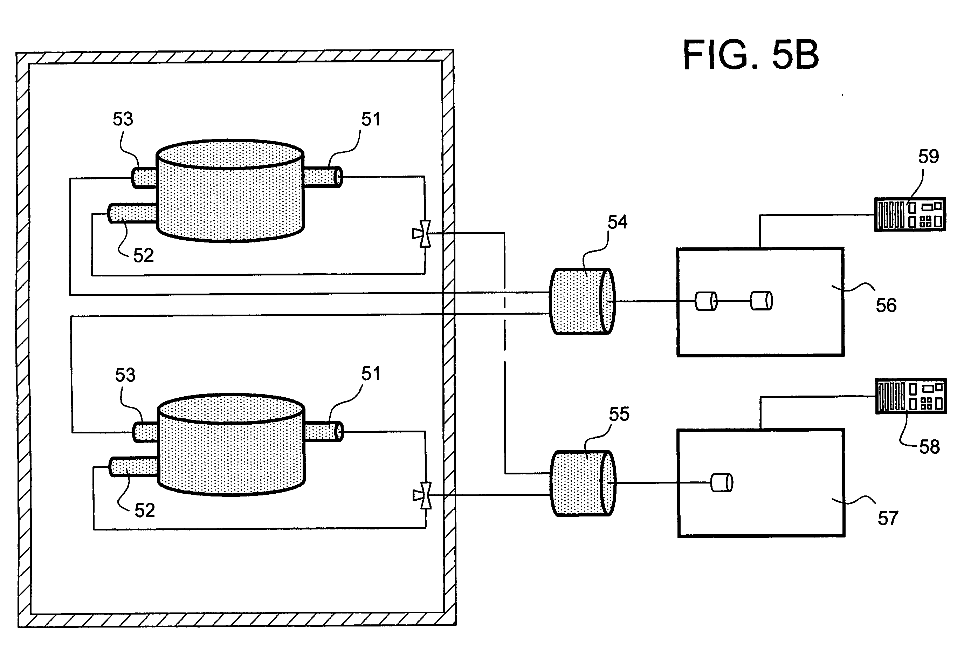

Les figures 5A et 5B montrent les deux montages expérimentaux possibles pour réaliser cette mesure en ligne de taux de rétention local. La détermination des trois temps de traversée des ondes ultrasonores (localisation de la première alternance de l'écho) peut être réalisée par calcul numérique ou par interface analogique.

Dans le montage de la figure 5A, les capteurs ultrasons (51, 52, 53) d'une même bride sont excités de façon synchrone. La réponse est la superposition des trois échos.

Etant donné que soit les milieux de propagation sont différents, soit les parcours acoustiques sont différents, les trois échos ne sont pas superposés et peuvent être facilement décorrélés.

(54) est un dispositif électronique intermédiaire d'adaptation d'impédance. Il peut inclure également, si nécessaire, un amplificateur.

(55) est un multiplexeur qui permet d'analyser la mesure sur plusieurs brides, successivement.

(56) est la carte digitale de pilotage du multiplexeur.

(57) est un émetteur/amplificateur à ultrasons.

(58) est une carte d'acquisition de données numériques pour les traitements effectués sur le calculateur (60).

La figure 5B montre un exemple de mesure en ligne sur plusieurs (2) brides, du taux de rétention, par ultrasons.

Les deux mesures des capteurs (51) et (52) sont effectuées, en même temps, dans les deux séparateurs, de façon synchrone.

Les milieux étant différents, les échos sont temporellement séparés.

Le multiplexeur (55) permet d'analyser les signaux dans les séparateurs de phase successivement sur plusieurs brides.

La mesure du capteur (53) est effectuée dans l'émulsion.

Le multiplexeur (54) permet d'examiner ainsi les mesures dans l'émulsion en plusieurs brides, successivement.

Les multiplexeurs (54) et (55) sont pilotés en parallèle.

(56) et (57) sont des émetteurs/amplificateurs spécifiques, à ultrasons.

(58) et (59) désignent les cartes d'acquisition de données associées pour la numérisation et le traitement des données sur calculateur.

On a visualisé les résultats de mesure en ligne du taux de rétention obtenus par colonne pulsée de diamètre 27 mm, avec des séparateurs de phase de longueur 10 mm et un parcours acoustique dans l'émulsion de 16 mm. Les mesures acoustiques sont comparées aux mesures sur prises d'échantillons. Le taux de rétention est modifié par action sur la pression de pulsation.

On en conclut que l'écart absolu reste inférieur à deux points.

En outre, l'association de mesures dans les séparateurs de phase et dans l'émulsion, grâce à la notion de bride regroupant toute l'instrumentation locale, permet de réaliser de nouvelles mesures caractéristiques de l'émulsion.

Ainsi, dans les phases séparées, lorsque les séparateurs de phases sont en matériaux polymère, la localisation temporelle de l'écho et la mesure de son amplitude maximale permet de déterminer l'impédance acoustique de la solution (produit de la masse volumique par vitesse de propagation du son) et par suite sa masse volumique.

Pour prendre en compte les variations d'énergie acoustique émise au tir à tir, un dispositif d'étalonnage doit être introduit dans le séparateur de phase.

On détermine alors, à partir de l'enregistrement des amplitudes moyennes sur la tige et la pastille de fond, supposée en TEFLON® (raisonnement identique pour autre polymère) :

$$Z_s = Z_T . \frac{A'_1 . 4 l . L - A_2 . (\pi d^2 - 4 l . L)}{A'_1 . 4 l . L + A_2 . (\pi d^2 - 4 l . L)}$$

avec :

$Z_s$ et $Z_T$ = impédances acoustiques de la solution et du TEFLON® (ou pastille de fond) ;
$A'_1$ et $A_2$ = amplitude des échos sur étalon et fond ;
L et l = dimension réflecteur étalon en inox ;
d = diamètre du faisceau ultrasons.

Et on en déduit par la suite la masse volumique $\rho$ de la solution :

$$\rho = \frac{Z_s}{v}$$

avec :

v = vitesse de propagation acoustique dans la solution.

Les essais de validation sur colonne 50 mm ont montré une très bonne détermination de la masse volumique de l'acide nitrique, avec une précision relative de l'ordre de 0,4 %.

Dans le séparateur de phase aqueuse, la tige étalon, de haute impédance acoustique, peut être réalisée en acier inox.

Dans le séparateur de phase organique, la tige étalon doit posséder une haute impédance acoustique et être hydrophobe. Elle est donc réalisée, par exemple, en verre hydrophobisé.

De plus, l'association de la mesure de taux de rétention et des mesures d'impédance acoustique dans chaque phase séparée de l'émulsion, permet de créer un dispositif de caractérisation de l'émulsion en terme également de taille moyenne et nombre moyen de gouttes.

Si l'on considère en effet qu'une goutte de taille supérieure à la longueur d'onde acoustique provoque une atténuation $A_G$ du signal, alors l'amplitude du signal transmis, peut être représentée par :

$$A_n = A_0 . (A_G)^n$$

avec :

A$_0$ = amplitude du signal sans goutte (taux de rétention nul) ; et
N = nombre de gouttes de même diamètre moyen d.

On montre que :

$$A_G = \frac{4 Z_{orga}^{\;2}}{Z_{aq} + Z_{orga}}$$

$Z_{aq}$ et $Z_{orga}$ représentant les impédances acoustiques des deux phases de l'émulsion.

Connaissant la valeur de la mesure acoustique du taux de rétention et sachant que par définition :

$$\beta = \frac{N \cdot \frac{4}{3} \cdot \frac{d^3}{8}}{\frac{\Phi_{US}^{\;2}}{4} \cdot l}$$

$\Phi_{US}$ et l = diamètre et longueur du faisceau ultrasons.

On détermine un nombre moyen N de gouttes après estimation du nombre équivalent n de gouttes de la taille du faisceau ultrasons par :

$$N \pi . d^2 = \frac{n}{2} . \pi . \Phi_{US}^{\;2} \; et \; N = \frac{n^3 . \Phi_{US}^{\;2}}{18 l^2 . \beta^2}$$

Et un diamètre moyen associé :

$$d = \sqrt{\frac{n}{2.N}} . \Phi_{US}$$

Soit une aire interfaciale d'échange de A = nπD$^2$.

Les essais ainsi réalisés sur colonne pulsée DN 27 mm montrent bien une atténuation du signal évoluant avec l'énergie de pulsation et donc le nombre de gouttes. Le parcours acoustique dans l'émulsion est de 16,4 mm (deux fois 8,2 mm) en écho sur une pastille en TEFLON®.

L'application des formules précédentes conduit au tableau bilan I suivant.

Tableau I

| Taux rétention | An/A0 | n | N | d | A |
|---|---|---|---|---|---|
| 7,6 % | 0,883 | 0,7 | 1,8 | 2,6 mm | 38,2 mm$^2$ |
| 8,8 % | 0,715 | 1,9 | 27,5 | 1,1 mm | 104,5 mm$^2$ |
| 15,1 % | 0,528 | 3,7 | 64 | 1,01 mm | 205 mm$^2$ |
| 18,3 % | 0,502 | 3,95 | 54,8 | 1,14 mm | 223,6 mm$^2$ |

(suite)

| Taux rétention | An/A0 | n | N | d | A |
|---|---|---|---|---|---|
| 21,6 % | 0,451 | 4,57 | 60,8 | 1,16 mm | 257 mm$^2$ |

L'estimation, d'après photos de la taille moyenne des gouttes est de l'ordre de 1 à 1,5 mm, à pression de pulsation de l'ordre de 100 mbars (taux de rétention de 15 à 18 %).

On a donc démontré que la bride intermédiaire, instrumentée, par exemple, de trois (ou quatre) capteurs ultrasons et équipée, par exemple, de deux séparateurs de phase est un excellent dispositif de caractérisation physique local d'une émulsion diphasique, en terme de :

- pourcentage volumique ;
- impédance acoustique et masse volumique ;
- taille et nombre moyen de gouttes.

Mais d'autres paramètres physico-chimiques peuvent être suivis par introduction de détecteurs, capteurs dans la zone de séparation de phase. Sont notamment envisageables :

- des fibres optiques pour mesure de concentrations élémentaires par absorptiométrie UV-Visible (spectrophotométrie) ;
- des sondes de conductivité ou pH.

Le principe est d'introduire l'élément sensible, ou un guide de transmission, dans le volume séparé à travers les parois du séparateur. La géométrie est adaptée pour séparer les différentes zones de mesure si nécessaire, pour éviter des interactions entre elles.

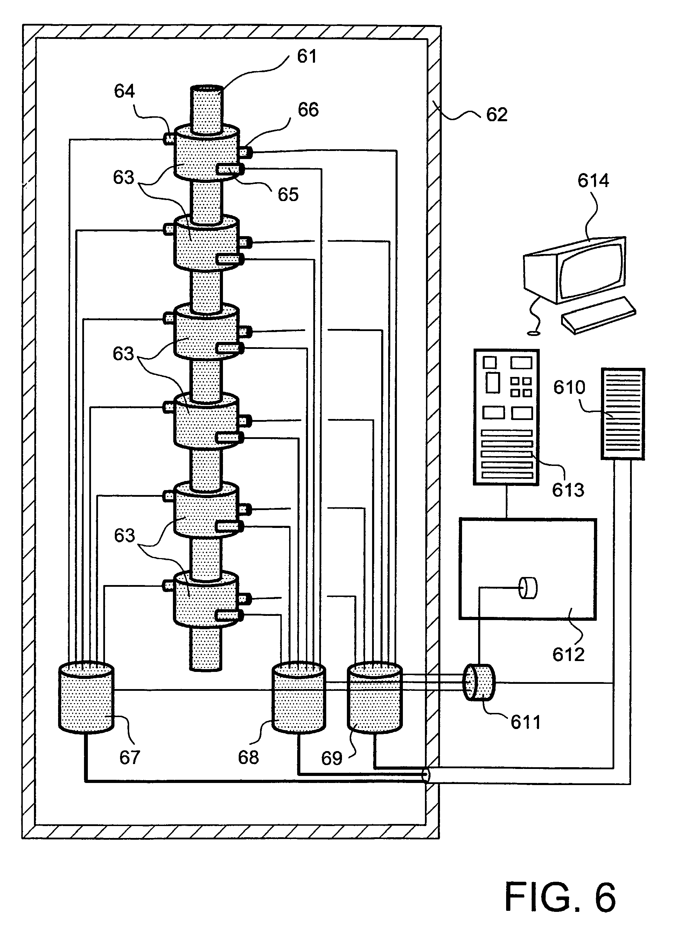

Sur la figure 6, on a représenté un appareil contenant un mélange diphasique, tel qu'une émulsion, par exemple un appareil, tel qu'une colonne pulsée (61).

Du fait que cet appareil peut traiter, par exemple, des substances radioactives, il est de préférence renforcé dans une enceinte étanche (62). Ladite colonne est pourvue de plusieurs brides (63) intermédiaires instrumentées selon l'invention. Sur la figure 5, ces brides sont au nombre de six et sont chacune munies de dispositifs de séparation et de renouvellement des phases et de capteurs, par exemple de capteurs à ultrasons.

La figure 6 représente ainsi une colonne pulsée (61) équipée, le long du fût, de brides intermédiaires instrumentées (63). Elles sont équipées de trois capteurs ultrasons identiques (64, 65, 66), effectuant chacun une mesure de vitesse de propagation au sein des trois milieux suivants :

- (1) : phase aqueuse séparée ;
- (2) : phase organique séparée ;
- (3) : émulsion.

Nous proposons ici une solution de mise en oeuvre de mesure de profil de taux de rétention local en ligne, limitant le nombre d'appareillage de pilotage. Plusieurs systèmes de multiplexage sont utilisés :

- tous les capteurs (un par bride) mesurant dans les séparateurs de phase aqueuse sont reliés au même multiplexeur (67) ;
- tous les capteurs (un par bride) mesurant dans les séparateurs de phase organique sont reliés à un deuxième multiplexeur (68) ;
- de même tous les capteurs mesurant dans l'émulsion sont reliés à un troisième multiplexeur (69).

Ces trois multiplexeurs (67, 68, 69) peuvent alors soit être pilotés directement par un calculateur (614), via trois émetteurs amplificateurs ultrasons spécifiques, soit comme le montre la figure 6, être reliés à un étage complémentaire de multiplexage (611), ce qui permet de réduire à un seul émetteur amplificateur (612) et une carte d'acquisition de données (613) la chaîne de mesure reliée au calculateur de pilotage. La référence (610) est une carte standard d'entrées/sorties digitales pour piloter les multiplexeurs.

A chaque instant t, les trois multiplexeurs (67, 68, 69) sont commutés sur le même numéro de voie et réalisent donc la transmission des mesures au niveau d'une même bride. Le multiplexeur complémentaire (611) permet de transmettre séquentiellement à la carte d'acquisition de données (613), les trois échos fournis par les trois capteurs de la bride. Les multiplexeurs sont ensuite commutés sur la bride suivante, après mise en forme et traitement des données acquises par le calculateur.

REFERENCES

[1] FR-A-2 780 789.

[2] US-A-4 726 221.

[3] « Model for hold-up measurements in liquid dispersions using an ultrasonic technique », J. YI and L. L. TAVLARIDES, Ind. Eng. Chem. Res., vol. 29, no. 3, p. 475 - 482, 1990.

[4] « Control of dispersed-phase volume fraction in multistage extraction columns », C. TSOURIS and L. L. TAVLARIDES, Chemical Engineering Science, vol. 46, no. 11, p. 2 857 - 2 865, 1991.

[5] FR-A-2 478 314.

[6] EP-A-0 035 936.

**Revendications**

1. Dispositif de séparation et de renouvellement des phases d'un mélange diphasique liquide-liquide constitué par une première phase liquide et par une seconde phase liquide circulant à contre-courant dans un appareil d'extraction liquide-liquide, ledit dispositif de séparation se présentant sous la forme d'un cylindre (1) droit creux dont la génératrice principale est sensiblement perpendiculaire au sens de déplacement des phases liquides, et dont une des bases est constituée par la paroi (2) de l'appareil d'extraction ou est positionnée au contact de cette paroi, ledit cylindre comprenant :

   - un orifice d'entrée (3) pour la phase que l'on souhaite piéger, placé sur la paroi latérale du cylindre sensiblement dans l'axe de déplacement de ladite phase que l'on souhaite piéger ;
   - un orifice de sortie (4) pour ladite phase que l'on souhaite piéger, séparée, de taille relativement plus petite que ledit orifice d'entrée et situé sur l'autre des bases du cylindre ;
   - un troisième orifice (5), pour l'autre phase, de taille intermédiaire à la taille de l'orifice d'entrée et à la taille de l'orifice de sortie, placé au voisinage de l'orifice d'entrée.

2. Dispositif selon la revendication 1, dans lequel ledit mélange diphasique est une émulsion ou dispersion diphasique liquide-liquide.

3. Dispositif selon la revendication 1, constitué par un matériau dont la mouillabilité est adaptée à la phase que l'on souhaite piéger.

4. Dispositif selon l'une quelconque des revendications 1 à 3, dans lequel la phase que l'on souhaite piéger est une phase aqueuse.

5. Dispositif selon l'une quelconque des revendications 1 à 3, dans lequel la phase que l'on souhaite piéger est une phase organique.

6. Dispositif selon la revendication 4, constitué par un matériau hydrophile, tel que l'acier inoxydable ou le polyéthylène.

7. Dispositif selon la revendication 5, constitué par un matériau hydrophobe et organophile, tel que le polytétrafluoroéthylène (TEFLON®), le PVDF ou le polychlorotrifluoroéthylène.

8. Dispositif selon l'une quelconque des revendications 1 à 7, dans lequel l'appareil d'extraction liquide-liquide est cylindrique, le diamètre du dispositif de séparation est inférieur ou égal à 90 % du diamètre de l'appareil d'extraction, et la longueur du dispositif de séparation est inférieure ou égale à 85 % du diamètre de l'appareil d'extraction.

**9.** Dispositif selon l'une quelconque des revendications 1 à 8, muni de un ou plusieurs capteur(s) pour réaliser des mesures dans la phase séparée.

**10.** Bride intermédiaire d'instrumentation pour un appareil d'extraction liquide-liquide comprenant un ou plusieurs dispositif(s) de séparation et de renouvellement des phases selon l'une quelconque des revendications 1 à 9.

**11.** Bride intermédiaire d'instrumentation selon la revendication 10, munie de un ou plusieurs capteur(s) pour réaliser des mesures physico-chimiques en ligne dans la phase séparée du ou des dispositif(s) de séparation.

**12.** Bride intermédiaire selon la revendication 11, munie, en outre, de un ou plusieurs capteur(s) pour réaliser des mesures au sein même du mélange diphasique, tel qu'une émulsion.

**13.** Bride selon l'une quelconque des revendications 11 à 12, dans lequel le ou les capteur(s) réalise(nt) des mesures physiques, chimiques, optiques, acoustiques, choisies notamment parmi les mesures de densité, concentration, acidité, température, pH, conductivité, diffusion, diffraction, absorption de la lumière, et propagation, atténuation des ondes acoustiques.

**14.** Bride selon l'une quelconque des revendications 10 à 13, comprenant un ou plusieurs capteur(s) pour réaliser des mesures de référence relatives à un ou plusieurs paramètre(s) dans la phase séparée du ou des dispositif(s) de séparation et un ou plusieurs capteur(s) pour réaliser des mesures relatives au(x)dit(s) même(s) paramètre(s) au sein du mélange diphasique, tel qu'une émulsion.

**15.** Bride selon l'une quelconque des revendications 10 à 14, dans laquelle les ou lesdits capteurs sont des capteurs ultrasons.

**16.** Bride selon la revendication 15, comprenant trois ou quatre capteurs ultrasons et deux dispositifs de séparation de phase.

**17.** Dispositif d'instrumentation en ligne comprenant une ou plusieurs brides selon l'une quelconque des revendications 10 à 16.

**18.** Dispositif d'instrumentation en ligne selon la revendication 17, dans lequel lesdites brides sont placées tout au long du dispositif d'extraction, afin d'établir un profil de mesures.

**Claims**

**1.** Device for separating and renewing the phases of a liquid-liquid diphasic mixture, comprising a first liquid phase and a second liquid phase circulating in counter-current in a liquid-liquid extraction device, wherein said separation device is in the form of a straight hollow cylinder (1), in which the principal generator is substantially perpendicular to the direction of movement of the liquid phases, and in which one of the bases is formed by the wall (2) of the extraction device or is positioned in contact with this wall, said cylinder comprising:

- an input orifice (3) for the phase that one wishes to trap, placed on the lateral wall of the cylinder, substantially in the axis of movement of said phase that one wishes to trap;
- an output orifice (4) for said phase that one wishes to trap, separated, relatively smaller than said input orifice and located on the other cylinder base;
- a third orifice (5), for the other phase, of intermediate size between the size of the input orifice and the size of the output orifice, placed near to the input orifice.

**2.** Device according to claim 1, in which said diphasic mixture is a liquid-liquid diphasic emulsion or dispersion.

**3.** Device according to claim 1, made out of a material whose wettability is adapted to the phase that one wishes to trap.

**4.** Device according to any of claims 1 to 3, in which the phase that one wishes to trap is an aqueous phase.

**5.** Device according to any of claims 1 to 3, in which the phase that one wishes to trap is an organic phase.

**6.** Device according to claim 4, made out of a hydrophilic material, such as stainless steel or polyethylene.

**7.** Device according to claim 5, made out of a hydrophobic and organophilic material, such as polytetrafluoroethylene (TEFLON®), PVDF or polychlorotrifluoroethylene.

**8.** Device according to any of claims 1 to 7, in which the liquid-liquid extraction device is cylindrical, the diameter of the separation device is less than or equal to 90 % of the diameter of the extraction device, and the length of the separation device is less than or equal to 85 % of the diameter of the extraction device.

**9.** Device according to any of claims 1 to 8, fitted with one or several sensor(s) to carry out measurements in the separated phase.

**10.** Intermediate instrumentation flange for a liquid-liquid extraction device comprising one or several device(s) for separating and renewing phases according to any of claims 1 to 9.

**11.** Intermediate instrumentation flange according to claim 10, fitted with one or several sensor(s) for carrying out on-line physical /chemical measurements in the separated phase of the separation device(s).

**12.** Intermediate instrumentation flange according to claim 11, fitted, in addition, with one or several sensor(s) for carrying out measurements within the diphasic mixture itself, such as an emulsion.

**13.** Intermediate instrumentation flange according to either of claims 11 and 12, in which the sensor(s) carry out physical, chemical, optical, acoustical measurements, selected particularly among specific gravity, concentration, acidity, temperature, pH, conductivity, diffusion, diffraction, light absorption and propagation, attenuation of sound wave measurements.

**14.** Flange according to any of claims 10 to 13, comprising one or several sensor(s) for carrying out reference measurements relating to one or several parameter(s) in the separated phase of the separation device(s) and one or several sensor(s) for carrying out measurements relating to the same parameter(s) within the diphasic mixture, such as an emulsion.

**15.** Flange according to any of claims 10 to 14, in which said sensor(s) are ultrasonic sensors.

**16.** Flange according to claim 15, comprising three or four ultrasonic sensors and two phase separation devices.

**17.** On-line instrumentation device comprising one or several flanges according to any of claims 10 to 16.

**18.** On-line instrumentation device according to claim 17, in which said flanges are placed along the extraction device, in order to obtain a measurement profile.


**Patentansprüche**

**1.** Vorrichtung zum Trennen und Erneuern der Phasen eines zweiphasigen Flüssigkeit-Flüssigkeitsgemisches, gebildet durch eine erste flüssige Phase und eine zweite flüssige Phase, die gegenströmig in einem Flüssigkeit-Flüssigkeits-Extraktionsgerät zirkulieren, wobei die genannte Trennvorrichtung sich in Form eines hohlen geraden Zylinders (1) präsentiert, dessen Hauptmantellinie im Wesentlichen senkrecht ist zu der Bewegungsrichtung der flüssigen Phasen und dessen eine Basis durch die Wand (2) des Extraktionsgeräts gebildet wird oder mit Kontakt zu dieser Wand positioniert ist, wobei der genannte Zylinder umfasst:

   - eine Eintrittsöffnung (3) für die Phase, die man fangen will, vorgesehen in der Seitenwand des Zylinders, im Wesentlichen in der Bewegungsachse der genannten Phase, die man fangen will;
   - eine Austrittsöffnung (4) von relativ kleinerer Größe als die genannte Eintrittsöffnung und in der anderen Basis des Zylinders vorgesehen für die genannte Phase die man fangen will, getrennt;
   - eine dritte Öffnung (5), für die andere Phase, mit einer Größe zwischen der Größe der Eintrittsöffnung und der Größe der Austrittsöffnung, vorgesehen in der Nähe der Eintrittsöffnung.

**2.** Vorrichtung nach Anspruch 1, bei der das genannte zweiphasige Gemisch eine zweiphasige Flüssigkeit-Flüssigkeitsemulsion oder-dispersion ist.

3. Vorrichtung nach Anspruch 1, gebildet durch ein Material dessen Benetzbarkeit an die Phase angepasst ist, die man fangen will.

4. Vorrichtung nach einem der Ansprüche 1 bis 3, bei der die Phase, die man fangen will, eine wässrige Phase ist.

5. Vorrichtung nach einem der Ansprüche 1 bis 3, bei der die Phase, die man fangen will, eine organische Phase ist.

6. Vorrichtung nach Anspruch 4, gebildet durch ein hydrophiles Material wie nichtrostender Stahl oder Polyethylen.

7. Vorrichtung nach Anspruch 5, gebildet durch ein hydrophobes und organophiles Material wie Polytretrafluorethylen (TEFLON®), PVDF, oder Polychlortrifluorethylen.

8. Vorrichtung nach einem der Ansprüche 1 bis 7, bei der das Flüssigkeit-Flüssigkeits-Extraktionsgerät zylindrisch ist, wobei der Durchmesser der Trennvorrichtung bezüglich des Durchmessers des Extraktionsgeräts kleiner ist oder gleich 90 %, und die Länge der Trennvorrichtung bezüglich des Durchmessers des Extraktionsgeräts kleiner ist oder gleich 85 %.

9. Vorrichtung nach einem der Ansprüche 1 bis 8, ausgestattet mit einem Sensor oder mehreren Sensoren, um in der getrennten Phase Messungen durchzuführen.

10. Instrumentierungs-Zwischenflansch für ein Flüssigkeit-Flüssigkeits-Extraktionsgerät mit einer oder mehreren Trenn- und Erneuerungsvorrichtungen der Phasen nach einem der Ansprüche 1 bis 9.

11. Instrumentierungs-Zwischenflansch nach Anspruch 10, ausgestattet mit einem oder mehreren Sensoren, um in der von der (den) Trennvorrichtung(en) getrennten Phase physikalisch-chemische Online-Messungen durchzuführen.

12. Instrumentierungs-Zwischenflansch nach Anspruch 11, außerdem ausgestattet mit einem oder mehreren Sensoren um selbst im Innern des Zweiphasengemisches, etwa einer Emulsion, Messungen durchzuführen.

13. Flansch nach einem der Ansprüche 11 bis 12, bei dem der Sensor oder die Sensoren physikalische, chemische, optische, akustische Messungen durchführen, ausgewählt insbesondere unter den Messungen des Typs Dichte, Konzentration, Acidität, Temperatur, pH, Konduktivität, Diffusion, Diffraktion, Absorption des Lichts, und Ausbreitung, Dämpfung von Schallwellen.

14. Flansch nach einem der Ansprüche 11 bis 13, umfassend: einen oder mehrere Sensoren zur Realisierung von Referenzmessungen bezüglich eines oder mehrerer Parameter in der von der (den) Trennvorrichtung(en) getrennten Phase und einen oder mehrere Sensoren zur Realisierung von Messungen bezüglich (dieses) dieser selben genannten Parameter im Innern des Zweiphasengemisches, etwa einer Emulsion.

15. Flansch nach einem der Ansprüche 10 bis 14, bei dem der oder die Sensoren Ultraschallsensoren sind.

16. Flansch nach Anspruch 15, drei oder vier Ultraschallsensoren und zwei Phasentrennvorrichtungen umfassend.

17. Online-Instrumentierungsvorrichtung, einen oder mehrere Flansche nach einem der Ansprüche 10 bis 16 umfassend.

18. Online-Instrumentierungsvorrichtung nach Anspruch 17, bei der die genannten Flansche entlang der Extraktionsvorrichtung platziert sind, um ein Messprofil zu erstellen.

FIG. 1

## FIG. 2

## FIG. 3

FIG. 4

FIG. 5A

EP 1 279 430 B1

FIG. 5B

EP 1 279 430 B1

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 645710 A
- FR 2780789 A
- US 4726221 A
- FR 2478314 A
- EP 0035936 A

**Littérature non-brevet citée dans la description**

- **J. YI and L. L. TAVLARIDES.** Model for hold-up measurements in liquid dispersions using an ultrasonic technique. *Ind. Eng. Chem. Res.,* 1990, vol. 29 (3), 475-482
- **C. TSOURIS ; L. L. TAVLARIDES.** Control of dispersed-phase volume fraction in multistage extraction columns. *Chemical Engineering Science,* 1991, vol. 46 (11), 2 857-2 865